# EUROPÄISCHE PATENTANMELDUNG

(11) **EP 4 113 189 A1**
(43) Veröffentlichungstag der Anmeldung: **04.01.2023**
(21) Anmeldenummer: 21182438.8
(22) Anmeldetag: 29.06.2021
(51) Int. Cl.: G02B 21/36, G02B 27/58, G02B 21/08, G02B 21/14, G06T 5/50, G06T 5/00, G06T 7/00

(54) **SYNTHESEVERFAHREN ZUR ERZEUGUNG EINES RÄUMLICH HOCHAUFGELÖSTEN BILDES**

(71) Anmelder: Siemens Aktiengesellschaft, 80333 München (DE)
(72) Erfinder: Engel, Thomas, Dr., 73432 Aalen (DE)

(57) **Zusammenfassung**

Die Erfindung betrifft einen Ansatz zum Erzeugen eines hochaufgelösten Bildes IMA eines Objekts OBJ umfassend einen ein Ptychographie-Syntheseverfahren verwendenden Rekonstruktionsschritt S2, wobei eine eine Vielzahl NB von Einzelaufnahmen Ei mit i=1,...,NB des Objekts OBJ umfassende Serie SER bereitgestellt wird, wobei verschiedene Einzelaufnahmen Ei der Serie SER in einem vorgelagerten Akquiseschritt S1 mit unterschiedlichen optischen Konfigurationen Ci der Aufnahmeeinrichtung aufgenommen sind. Im Rekonstruktionsschritt S2 werden aus der Serie SER hervorgehende Einzelaufnahmen Ei in einem Korrekturschritt S2-KORR anhand einer Charakteristik CHAR der Aufnahmeeinrichtung korrigiert, resultierend in einer korrigierten Serie SER_KORR, umfassend NB korrigierte Einzelaufnahmen Ei_KORR im Fourierraum. Das hochaufgelöste Bild IMA wird schließlich basierend auf der so korrigierten Serie SER_KORR mittels einer synthetisierenden Rekonstruktion erzeugt.

## Beschreibung

Die Erfindung betrifft die Erzeugung eines räumlich hochaufgelösten Bildes IMA eines Objekts OBJ unter Zuhilfenahme eines Syntheseverfahrens, wobei das Syntheseverfahren insbesondere einen ptychographischen Ansatz verfolgt, vorzugsweise eine fourier-ptychographischen Ansatz.

Das räumliche Auflösungsvermögen optischer Aufnahmeeinrichtungen wie bspw. von Mikroskopen oder Kameras hängt zum Einen von der verwendeten Wellenlänge einer Beleuchtungseinrichtung und zum Anderen von der numerischen Apertur der Aufnahmeeinrichtung ab. Dabei gilt, dass sich das räumliche Auflösungsvermögen mit steigender numerischer Apertur verbessert.

Eine künstliche Vergrößerung der effektiv genutzten Apertur kann bspw. mit Hilfe der Fourier-Ptychographie erreicht werden. Dort wird eine Vielzahl von Einzelbildern eines abzubildenden Objekts unter verschiedenen optischen Konfigurationen aufgenommen, wobei sich die optischen Konfigurationen dadurch unterscheiden, dass eine Beleuchtung des Objekts zu einer jeweiligen Aufnahme aus unterschiedlichen Richtungen eingebracht wird. Dies wird grundlegend in "High numerical aperture Fourier ptychography: principle, implementation and characterization" von Xiaoze Ou, Roarke Horstmeyer, Guoan Zheng, und Changhuei Yang in Optics Express Vol. 23, Issue 3, pp. 3472-3491 (2015) sowie in verschiedenen Anwendungen in WO2021/052992A1 und in WO2021/053374A1 beschrieben.

Bei der Fourier-Ptychographie werden demnach Bilder mit einer Beleuchtung aus unterschiedlichen Beleuchtungsrichtungen mit einem Objektiv begrenzter Apertur aufgenommen und danach zu einem Bild hoher Auflösung synthetisiert. Für hochwertige und hochauflösende Rekonstruktionen müssen jedoch zahlreiche Einzelbilder aufgenommen werden, die im Aperturbereich mit einem jeweiligen benachbarten Einzelbild zu mind. 50% überlappen müssen. Somit ist eine große Anzahl an Bildern aufzunehmen, resultierend in einer entsprechenden Messdauer.

Ein Lösungsansatz kann darin bestehen, über Näherungsverfahren oder Optimierungsverfahren die Zahl der benötigten Bildaufnahmen zu reduzieren. So wird die Zahl der Einzelbilder für höhere Aperturbereiche stärker reduziert als für zentrale Bereiche. Hohe Aperturen tragen insbesondere zur Detailtreue der Abbildung bei. Die Detailtreue kann jedoch bei den üblichen Verfahren leiden bzw. für den Fall, dass im Syntheseschritt bspw. gelernte Rekonstruktionen mittels "convolutional neural networks" (CNN) oder tiefen CNN (deepCNN, dCNN) zum Einsatz kommen, durch typische Verläufe an Kanten oder Ecken ersetzt werden, so wie sie von vermeintlich vergleichbaren Bildern gelernt worden sind. Für Bilder, die vorwiegend für qualitative Auswertungen bzw. für visuelle Betrachtung bestimmt sind, kann dieser Ansatz ausreichend sein. Für metrologische Fragestellungen kann so allerdings die eingeschränkte Objekttreue der Bilder das Messergebnis erheblich verfälschen, weil bspw. Kanten abweichend von der Realität abgebildet sein können, so dass Längen- oder Flächenmaße falsch bestimmt werden. Entsprechendes gilt auch für Tiefeninformationen, die beispielsweise über Farbwerte bzw. Farbsättigungen bzw. Grauwerte bestimmt werden oder alternativ über Phasenwerte, die im Rekonstruktionsprozess unmittelbar anfallen bzw. bestimmt werden können.

Es ist daher eine Aufgabe der vorliegenden Erfindung, eine verbesserte Möglichkeit anzugeben, in verkürzter Zeit ein räumlich hochaufgelöstes Bild eines Objekts zu erzeugen.

Diese Aufgabe wird durch das in Anspruch 1 beschriebene Verfahren sowie durch die in Anspruch 13 beschriebene Anordnung gelöst. Die Unteransprüche beschreiben vorteilhafte Ausgestaltungen.

Ein Verfahren zum Erzeugen eines hochaufgelösten Bildes IMA eines Objekts OBJ mit einer Aufnahmeeinrichtung umfassend einen ein Syntheseverfahren verwendenden Rekonstruktionsschritt S2 sieht vor, dass eine Vielzahl NB von Einzelaufnahmen Ei mit i=1,...,NB des Objekts OBJ im Ortsraum oder im Fourierraum umfassende Serie SER bereitgestellt wird, wobei verschiedene Einzelaufnahmen Ei der Serie SER in einem vorgelagerten Akquiseschritt S1, der nicht zwangsläufig Teil des hier beanspruchten Verfahrens sein muss, mit unterschiedlichen optischen Konfigurationen Ci der Aufnahmeeinrichtung aufgenommen wurde. Die Einzelaufnahmen Ei können je nach Konfiguration einer Bilderzeugungseinrichtung der Aufnahmeeinrichtung Bilder Bi im Ortsraum oder aber entsprechende, im Folgenden mit Fi bezeichnete Aufnahmen im Fourierraum sein. Im Rekonstruktionsschritt S2 werden aus der Serie SER hervorgehende Datensätze, d.h. jede einzelne Einzelaufnahme Ei der Serie SER bzw. daraus hervorgehende Datensätze, in einem Korrekturschritt S2-KORR anhand einer ggf. vorab ermittelten Charakteristik CHAR der Aufnahmeeinrichtung korrigiert, resultierend in einer korrigierten Serie SER_KORR, umfassend NB korrigierte Einzelaufnahmen Ei KORR im Fourierraum. Das hochaufgelöste Bild IMA wird schließlich basierend auf der so korrigierten Serie SER_KORR mittels einer synthetisierenden Rekonstruktion erzeugt.

Aus Sicht des Rechenaufwandes bzw. der benötigten Rechenzeit bewirkt die hier vorgeschlagene Vorschaltung der Rücktransformation der gemessenen Bilddaten auf dahingehend korrigierte Bilder, dass sie quasi mit einer idealen Optik aufgenommen wurden, dass große Teile des iterativen und damit zeitaufwendigen Rechnens im Rahmen des Syntheseverfahrens bereits vorab bei der Charakterisierung des Messsystems einmalig vorweggenommen werden.

Das der Erfindung zu Grunde liegende Konzept liegt in der Vorverarbeitung der Einzelaufnahmen Ei des Objekts OBJ im Korrekturschritt S2-KORR. Es wird davon ausgegangen, dass eine Einzelaufnahme Ei neben den vom abzubildenden Objekt OBJ abhängigen Bildanteilen Ei(OBJ) auch Anteile Ei(MTF) aufweist, die von einer Übertragungsfunktion MTF der Aufnahmeeinrichtung abhängen. Eine solche Übertragungsfunktion MTF kann konkret je nach Ausbildung der Aufnahmeeinrichtung von diversen Komponenten der Aufnahmeeinrichtung abhängen, insbesondere von der Optik der Aufnahmeeinrichtung bzw. von allen Medien und Komponenten im optischen Strahlengang zwischen dem Objekt und der Bildebene, zu denen bspw. Immersionsmedien und optische Komponenten wie Deckgläser, Linsen, bspw. Tubus- oder Relaislinsen, das Objektiv, Kameradapter etc. zu zählen wären. Das Konzept sieht daher eine Trennung der entsprechenden Bildanteile Ei(OBJ) und Ei(MTF) vor, was mit Hilfe einer Entfaltung im Ortsraum oder einer entsprechenden Division im Fourierraum erfolgt, um schließlich korrigierte Daten FEi_KORR zu erzeugen. Die im Rahmen der synthetisierenden Rekonstruktion des hochaufgelösten Bildes IMA erfolgende Erzeugung eines Gesamtdatensatzes IMA_k im Fourierraum wird dann auf Grundlage dieser vorab erzeugten korrigierten Daten Ei_KORR mit der reinen Objektinformation Ei(OBJ) ausgeführt. So entsteht ein synthetisierter Gesamtdatensatz IMA_k mit bestmöglicher Detailtreue, was einer Aperturfunktion mit dem konstanten Wert 1 für alle Aperturen entspricht. Anders als in sonst üblichen synthetisierenden Rekonstruktionswegen, bspw. ptychographische Rekonstruktionen, kann so die Aperturfunktion auch in der interaktiven Berechnung des synthetischen Bildes IMA als gegeben vorausgesetzt werden. Dies verspricht, dass die Rekonstruktionsgeschwindigkeit bzw. die Synthesegeschwindigkeit bei der Berechnung des hochaufgelösten Bildes IMA deutlich beschleunigt wird. Falls spezifischere Aperturfunktionen benötigt werden, kann das auch nachträglich auf das ideale Bild angewendet werden als Faltung des bestmöglichen Bildes mit der gewünschten Übertragungsfunktion, die zu der gewünschten Aperturfunktion passt. Das vorgeschlagene Verfahren reduziert zudem die Zahl der für eine erfolgreiche Rekonstruktion zwingend erforderlichen Einzelaufnahmen Ei, was eine weitere Zeitersparnis im Gesamtprozess bedeutet.

Das Syntheseverfahren kann ein Ptychographieverfahren, insbesondere ein Fourier-Ptychographieverfahren, und die synthetisierende Rekonstruktion kann eine Ptychographie-Rekonstruktion, insbesondere eine Fourier-Ptychographie-Rekonstruktion, sein.

Im Korrekturschritt S2-KORR können vom Abbildungssystem in den Einzelaufnahmen Ei verursachte Einflüsse Ei(MTF) entfernt werden, so dass im Idealfdall die entsprechenden korrigierten Daten Ei_KORR weitestgehend ausschließlich von vom Objekt abhängigen Bildinhalten Ei(OBJ) geprägt sind. Die Bestimmung solcher reinen Objektanteile Ei(OBJ) in den Einzelaufnahmen Ei hat den Vorteil, dass es eine breitere Übertragungsfunktion MTF mit stärker ausgeprägten höheren Frequenzanteilen gibt. So kann der im konventionellen Fourier-Ptychographieverfahren benötigte Überlapp der Aufnahmen Ei im Frequenzbereich reduziert werden, was wiederum zu einer verkürzten Zeit für die Aufnahmen im Akquiseschritt S1 führt. Das resultiert in einer weiteren Verringerung des Zeitbedarfs für eine Bildaufnahme samt Rekonstruktion.

Die Charakteristik CHAR der Aufnahmeeinrichtung kann eine Abbildungsgüte der Aufnahmeeinrichtung repräsentieren und durch eine Übertragungsfunktion MTF der Aufnahmeeinrichtung beschrieben sein.

In der synthetisierenden Rekonstruktion des Rekonstruktions-schritts S2 können in einem Fusionsschritt S2-2 des Rekonstruktionsschritts S2 die korrigierten Einzelaufnahmen Ei_KORR im Fourierraum zu einem Gesamtdatensatz IMA_k zusammengefügt werden. Anschließend kann in einem Rücktransformationsschritt S2-3 des Rekonstruktionsschritts S2 durch Fourier-Rücktransformation des Gesamtdatensatzes IMA k in den Ortsraum das hochaufgelöste Bild IMA des Objekts OBJ erzeugt werden. Die im Fusionsschritt S2-2 stattfindende Synthese der einzelnen korrigierten Aufnahmen Ei_KORR erfolgt bspw. mit einem sog. "phase retrieval agorithm"., dessen Iteration üblicherweise eine Pupillen- bzw. Aperturfunktion mit berechnet.

Auf letzteres könnte aufgrund der hier eingeführten Neuerung mit optimierten Eingangsdaten Ei_KORR jedoch vorteilhafterweise verzichtet werden. Alternativ kann diese Funktion bei der Synthese als Randbedingung auf den Wert "eins" gesetzt werden bis zur maximalen numerischen Apertur NA, für die die Rekonstruktion durchgeführt werden soll, bzw. bis zur Apertur NA_{sys}, die sich aus der Objektivapertur NA_{obj} und der Apertur NA_{Bel} der eingesetzten Beleuchtungsrichtungen zusammensetzt zu NA_{Sys} = NA_{Obj} + NA_{Bel}. Dabei sind NA-Werte NA>1 für NA_{Sys} erreichbar. Der Wert der Aperturfunktion NA=1 für das gesamte synthetisierte Bild bedeutet dann unmittelbar auch, dass der synthetisierte Gesamtdatensatz IMA_k die bestmögliche Bildinformation und bestmögliche Detailinformation enthält. Auf diesen Datensatz können ggf. weitere Übertragungsfunktionen angewendet werden, um so Bilder zu erhalten, wie sie mit realen Abbildungssystemen aufgenommen worden wären, die dieselbe Übertragungsfunktion und Beleuchtungscharakteristik aufweisen.

Die im Akquiseschritt S1 aufgenommenen und dem Rekonstruktionsschritt S2 bereitgestellten Einzelaufnahmen Ei des Objekts OBJ können in einer ersten und zweiten Ausführungsform Bilder Bi im Ortsraum sein, wobei im Rekonstruktionsschritt S2 zunächst im Korrekturschritt S2-KORR die bereitgestellten Bilder Bi jeweils anhand der Charakteristik CHAR korrigiert werden, resultierend in korrigierten Bildern Bi_KORR, und die so erzeugten korrigierten Bilder Bi_KORR danach in einem Transformationsschritt S2-1 jeweils fouriertransformiert werden, resultierend in den jeweiligen korrigierten Einzelaufnahmen Ei_KORR.

Dabei kann im Korrekturschritt S2-KORR zur Berechnung eines jeweiligen korrigierten Bildes Bi_KORR ein jeweiliges Bild Bi im Ortsraum mittels der Charakteristik CHAR mathematisch entfaltet werden, resultierend in einem jeweiligen korrigierten Bild Bi_KORR.

Weiterhin davon ausgehend, dass die im Akquiseschritt S1 aufgenommenen und dem Rekonstruktionsschritt S2 bereitgestellten Einzelaufnahmen Ei des Objekts OBJ Bilder Bi im Ortsraum sind, können im Rekonstruktionsschritt S2 alternativ zunächst in einem Transformationsschritt S2-1 die bereitgestellten Bilder Bi jeweils fouriertransformiert werden, resultierend in jeweiligen Transformierten FBi. Die so erzeugten Transformierten FBi können danach als Eingangsdatensätze INi dem Korrekturschritt S2-KORR bereitgestellt werden, wobei jeweils ein Eingangsdatensatz INi einer Transformierten FBi entspricht, wobei im Korrekturschritt S2-KORR jeder der Eingangsdatensätze INi anhand der Charakteristik CHAR korrigiert wird, resultierend in den korrigierten Einzelaufnahmen Ei_KORR.

Im Korrekturschritt S2-KORR kann dann zur Berechnung der korrigierten Transformierten FBi_KORR ein jeweiliger Eingangsdatensatz INi im Fourierraum durch die Charakteristik CHAR dividiert werden. Die Entfernung des Einflusses der Aufnahmeeinrichtung aus den Einzelaufnahmen Ei ist eine unmittelbare iterationsfreie Rechenoperation als Division im Fourierraum für jede der Einzelaufnahmen FBi die auf passender Rechenhardware sehr effizient und schnell ausführbar ist. Hier ist lediglich auf eine passende Regularisierung zu achten, wenn die Übertragungsfunktion MTF im betrachteten Bereich Nullstellen aufweist.

In einer dritten Ausführungsform können die im Akquiseschritt S1 aufgenommenen und dem Rekonstruktionsschritt S2 bereitgestellten Einzelaufnahmen Ei des Objekts OBJ Datensätze Fi im Fourierraum sein Die Datensätze Fi können dann als Eingangsdatensätze INi dem Korrekturschritt S2-KORR bereitgestellt werden, wobei ein Eingangsdatensatz INi einem Datensatz Fi entspricht, wobei im Korrekturschritt S2-KORR jeder der Eingangsdatensätze INi anhand der Charakteristik CHAR korrigiert wird, resultierend in den korrigierten Einzelaufnahmen Ei_KORR.

Wie oben kann dabei im Korrekturschritt S2-KORR zur Berechnung der jeweiligen korrigierten Einzelaufnahme Ei KORR ein jeweiliger Eingangsdatensatz INi im Fourierraum durch die Charakteristik CHAR dividiert werden, wobei auch hier eine sehr effiziente und schnelle Berechnung möglich ist.

Das Verfahren kann auch den Akquiseschritt S1 selbst umfassen, wobei der Akquiseschritt S1 dem Rekonstruktionsschritt S2 vorgeschaltet ist und im Akquiseschritt S1 die die Vielzahl NB von Einzelaufnahmen Ei des Objekts OBJ im Ortsraum oder im Fourierraum umfassende Serie SER aufgenommen wird, wobei verschiedene Einzelaufnahmen Ei der Serie SER mit unterschiedlichen optischen Konfigurationen Ci der Aufnahmeeinrichtung aufgenommen werden.

Ggf. kann dabei auch die Charakteristik CHAR im Akquiseschritt S1 ermittelt werden. Ansonsten würde sie unabhängig von einer jeweiligen Ausführung des Verfahrens vorab bestimmt werden.

Eine Anordnung zum Erzeugen eines hochaufgelösten Bildes IMA eines Objekts OBJ weist eine Aufnahmeeinrichtung mit einer Beleuchtungseinrichtung, einer Bildgebungseinrichtung und einem Controller auf, wobei der Controller eingerichtet ist, um das beschriebene Verfahren auszuführen. Die Beleuchtungseinrichtung ist derart ausgebildet, dass sie das Objekt aus verschiedenen Richtungen beleuchten kann, während die Bildgebungseinrichtung derart ausgebildet ist, dass sie Einzelaufnahmen Ei des Objekts bei den verschiedenen Beleuchtungen aufnehmen kann. Die Aufnahmeeinrichtung kann entweder derart eingerichtet sein, dass die Einzelaufnahmen Ei des Objekts OBJ Bilder im Ortsraum sind, oder aber derart, dass die Einzelaufnahmen Ei des Objekts OBJ Datensätze im Fourierraum sind.

Weitere Vorteile und Ausführungsformen ergeben sich aus den Zeichnungen und der entsprechenden Beschreibung.

Im Folgenden werden die Erfindung und beispielhafte Ausführungsformen anhand von Zeichnungen näher erläutert. Dort werden gleiche Komponenten in verschiedenen Figuren durch gleiche Bezugszeichen gekennzeichnet. Es ist daher möglich, dass sich bei der Beschreibung einer zweiten Figur zu einem bestimmten Bezugszeichen, welches bereits im Zusammenhang mit einer anderen, ersten Figur erläutert wurde, keine näheren Erläuterungen finden. In einem solchen Fall ist bei der Ausführungsform der zweiten Figur davon auszugehen, dass die dort mit diesem Bezugszeichen gekennzeichnete Komponente auch ohne nähere Erläuterung im Zusammenhang mit der zweiten Figur die gleichen Eigenschaften und Funktionalitäten aufweist, wie im Zusammenhang mit der ersten Figur erläutert. Des Weiteren werden der Übersichtlichkeit wegen teilweise nicht sämtliche Bezugszeichen in sämtlichen Figuren dargestellt, sondern nur diejenigen, auf die in der Beschreibung der jeweiligen Figur Bezug genommen wird.

Es zeigen:
- FIG 1: eine Aufnahmeeinrichtung zum Erzeugen eines hochaufgelösten Bildes IMA,
- FIG 2: eine Draufsicht auf eine Beleuchtungseinrichtung mit einer Vielzahl von Lichtquellen,
- FIG 3: einen generellen Ablauf eines Fourier-Ptychographie Verfahrens zum Erzeugen eines räumlich hochaufgelösten Bildes IMA eines Objekts OBJ,
- FIG 4: eine erste Ausführungsform eines Fourier-Ptychographie Verfahrens gemäß der Erfindung und
- FIG 5: eine zweite Ausführungsform eines Fourier-Ptychographie Verfahrens gemäß der Erfindung,
- FIG 6: eine dritte Ausführungsform eines Fourier-Ptychographie Verfahrens gemäß der Erfindung.

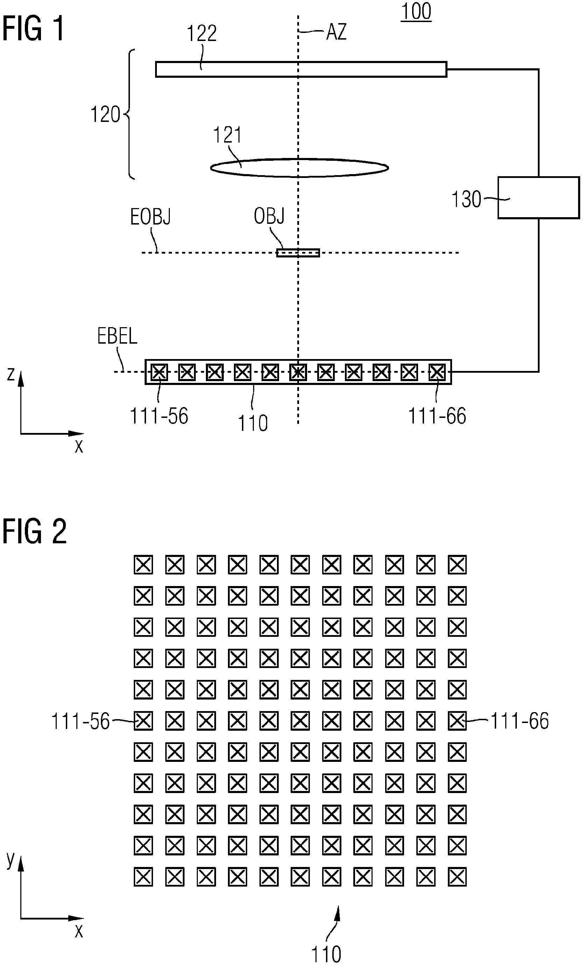

Die FIG 1 zeigt eine Aufnahmeeinrichtung 100 zum Erzeugen eines hochaufgelösten Bildes IMA eines Objekts OBJ. Im Anwendungsfall der FIG 1 ist die Aufnahmeeinrichtung 100 rein exemplarisch als Durchlichtmikroskop ausgebildet. Die folgenden Ausführungen zur Erzeugung des räumlich hochaufgelösten Bildes IMA anhand des Syntheseverfahrens lassen sich aber ohne weiteres auf jedes Abbildungssystem anwenden, bei dem ein Objekt wie unten beschrieben mit unterschiedlichen, diskreten Beleuchtungsrichtungen beleuchtet wird - sowohl für Auflichtals auch für Durchlichtverfahren. Beispiele neben der Durchlichtmikroskopie könnten kamerabasierte optische Inspektionssysteme bspw. zur Qualitätsprüfung in der industriellen Fertigung.

Die Aufnahmeeinrichtung 100 umfasst eine Beleuchtungseinrichtung 110, eine Bilderzeugungseinrichtung 120 sowie einen Controller 130. In einer Objektebene EOBJ der Aufnahmeeinrichtung 100 kann das abzubildende Objekt OBJ platziert werden. Die Bilderzeugungseinrichtung 120 ist im Wesentlichen aufgebaut aus einem durch eine Linse symbolisierten Objektiv 121 und eine Detektionsfläche 122, bspw. realisiert durch eine CCD-Kamera. Im Betrieb der Aufnahmeeinrichtung 100 strahlt die Beleuchtungseinrichtung 110 eine elektromagnetische Strahlung bzw. Licht in einem für das Abbilden des Objekts OBJ geeigneten Wellenlängenbereich in Richtung des Objekts OBJ. Das daraufhin vom Objekt OBJ abgestrahlte bzw. ggf. gebrochene, gebeugte oder reflektierte Licht wird mittels des Objektivs 121 auf die Detektionsfläche 122 fokussiert. D.h. das Objektiv 121 bildet das in der Objektebene EOBJ angeordnete Objekt auf die Detektionsfläche 122 ab, so dass diese eine jeweilige Einzelaufnahme Ei, bspw. ein Bild Bi im Ortsraum, detektiert und somit erzeugt. Eine solche erzeugte Einzelaufnahme Ei kann dann bspw. an den Controller 130 übertragen und dort in einem Speicher für eine spätere weitergehende Bildverarbeitung abgelegt werden.

Das in der Objektebene EOBJ der Aufnahmeeinrichtung 100 angeordnete Objekt OBJ soll entsprechend der an sich bekannten und unten kurz zusammengefassten Fourier-Ptychographischen-Methode in verschiedenen optischen Konfigurationen Ci mit i=1,...,NB der Aufnahmeeinrichtung 100 abgebildet werden, um schließlich aus den daraus resultierenden und bspw. im Controller 130 zwischenzeitlich abgespeicherten Einzelaufnahmen Ei das hochaufgelöste Bild IMA im Ortsraum zu rekonstruieren. Eine jeweilige optische Konfiguration Ci kann sich dadurch auszeichnen, dass das Objekt OBJ mit einer vorbestimmten Auswahl von individuellen Lichtquellen der Beleuchtungseinrichtung 110 der Aufnahmeeinrichtung 100 gesteuert durch den Controller 130 aus einer bestimmten Richtung beleuchtet wird, wobei die Beleuchtung für verschiedene Konfigurationen Ci aus verschiedenen Richtungen erfolgt. Alternativ kann sich eine jeweilige optische Konfiguration Ci auch dadurch auszeichnen, dass das Objekt OBJ gesteuert durch den Controller 130 mit einer vorbestimmten Farbe beleuchtet wird, wobei die Beleuchtung für verschiedene Konfigurationen Ci mit verschiedenen Farben erfolgt. Im Folgenden wird jedoch von der Ausführungsform ausgegangen, bei der sich die optischen Konfigurationen Ci hinsichtlich der Beleuchtungsrichtung unterscheiden. Hierzu umfasst die Beleuchtungseinrichtung 110 eine Vielzahl NL von an unterschiedlichen Orten angeordneten Lichtquellen 111-q mit q=1,...,NL, die gesteuert durch den Controller 130 einzeln ein- und abgeschaltet werden können (der Übersichtlichkeit wegen sind in FIG 1 sowie auch in der FIG 2 nicht alle Lichtquellen 111-q der Beleuchtungseinrichtung 110 mit Bezugszeichen versehen, sondern lediglich eine willkürliche Auswahl davon). Die Lichtquellen 111-q sind jeweils derart in einem bekannten Muster angeordnet, dass sie das abzubildende, in der Objektebene EOBJ der Aufnahmeeinrichtung 100 angeordnete Objekt OBJ derart aus unterschiedlichen Richtungen beleuchten können, dass die Bilderzeugungseinrichtung 120 der Aufnahmeeinrichtung 100 jeweils eine entsprechende Einzelaufnahme Ei aufnehmen kann.

Als Lichtquellen 111-q kommen bspw. monochrome LEDs, RGB LEDs, S-LEDs, Laser etc. in Frage. Bspw. kann die Beleuchtungseinrichtung 110 eine Vielzahl NL=NB von LEDs aufweisen, wobei die LEDs in einer zur optischen Achse AZ der Aufnahmeeinrichtung 100 senkrecht orientierten Ebene EBEL bspw. in einem quadratischen Array angeordnet sein können, wie bspw. in WO2021/052992A1 beschrieben und in der FIG 2 angedeutet. Alternativ ist auch eine Anordnung in konzentrischen Kreisen denkbar wie in WO2021/053374A1, wobei diese Anordnung sowohl zweidimensional als auch dreidimensional, d.h. bspw. angeordnet auf einer gedachten Halbkugel, ausgebildet sein kann. Für den Fall, dass NL=NB gilt, kann je Konfiguration Ci genau eine der Lichtquellen eingeschaltet sein, wobei für unterschiedliche Konfigurationen Ci und damit für unterschiedliche Bilder Bi unterschiedliche Lichtquellen eingeschaltet sind, um die unterschiedlichen Beleuchtungsrichtungen zu realisieren.

In der FIG 1 sind zur Veranschaulichung lediglich elf LEDs 111-q dargestellt, die sich in dieser Darstellung entlang nur einer Dimension x erstrecken. Die FIG 2 deutet exemplarisch anhand einer Draufsicht in Richtung der optischen Achse AZ der Aufnahmeeinrichtung 100 auf die Ebene EBEL an, wie die Lichtquellen 111-q in zwei Dimensionen x, y in der Ebene EBEL angeordnet sein können. In der Praxis kann die Beleuchtungseinrichtung 110 mehrere hundert Lichtquellen 111-q umfassen.

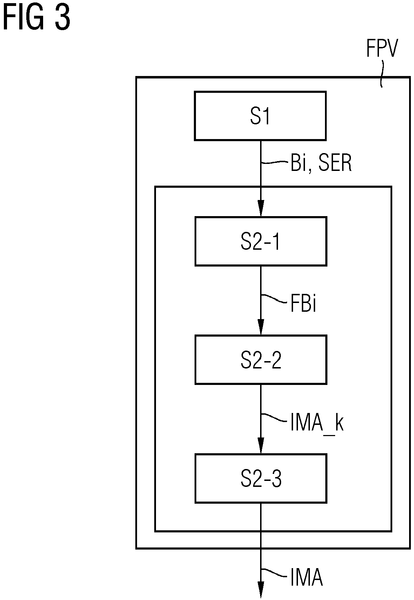

Das hier vorgestellte und in der FIG 3 schematisch dargestellte Verfahren zum Erzeugen des räumlich hochaufgelösten Bildes IMA des Objekts OBJ mit Hilfe der Aufnahmeeinrichtung 100 und gesteuert durch deren Controller 130 folgt im Wesentlichen dem typischen Ablauf eines Fourier-Ptychographie-Verfahrens (FP-Verfahren), wie es bspw. im Artikel "High numerical aperture Fourier ptychography: principle, implementation and characterization" von Xiaoze Ou, Roarke Horstmeyer, Guoan Zheng, und Changhuei Yang in Optics Express Vol. 23, Issue 3, pp. 3472-3491 (2015) oder auch in WO2021/052992A1 beschrieben wird. Das hier mit der Aufnahmeeinrichtung 100 angewendete FP-Verfahren weist demnach grundsätzlich die gleichen Verfahrensschritte auf.

Kurz zusammengefasst und in FIG 3 schematisch dargestellt wird in einem Akquiseschritt S1 des im Controller 130 ausgeführten FP-Verfahrens FPV mit der Aufnahmeeinrichtung 100 eine Bildserie SER umfassend eine Vielzahl NB von Einzelbildern Bi mit i=1,...,NB aufgenommen. Jedes der Bilder Bi enthält das Objekt OBJ mit vergleichsweise geringer Auflösung. Verschiedene Bilder Bi, Bj mit j=1,...,NB und i≠j der Bildserie SER unterscheiden sich dadurch, dass sie mit unterschiedlichen der oben bereits eingeführten optischen Konfigurationen Ci der Aufnahmeeinrichtung 100 aufgenommen werden, d.h. mit Beleuchtungen aus unterschiedlichen Richtungen (oder, in der oben angedeuteten Alternative, mit Beleuchtungen mit unterschiedlichen Farben bei dann typischerweise gleichbleibender Richtung). Dabei wird bei den unterschiedlichen optischen Konfigurationen Ci jeweils ein anderer Teil des Fourier-Spektrums des Objekts OBJ aufgenommen. Die unterschiedlichen Bilder Bi haben dabei einen -zumindest teilweise- unterschiedlichen Informationsgehalt, insbesondere enthalten sie unterschiedliche Raumfrequenzen des Objekts OBJ.

Aus der Bildserie SER bzw. aus den unterschiedlichen Bildern Bi wird schließlich in einem nach dem Akquiseschritt S1 erfolgenden Rekonstruktionsschritt S2 im Rahmen einer Fourier-Ptychographie-Rekonstruktion (FP-Rekonstruktion) ein hochaufgelöstes Bild IMA erzeugt.

Im Rekonstruktionsschritt S2 werden zunächst in einem Transformationsschritt S2-1 aus den mit den verschiedenen Konfigurationen Ci erzeugten Bildern Bi der Bildserie SER im Ortsraum Fourier-Transformierte FBi der Bilder Bi berechnet. In einem daran anschließenden Fusionsschritt S2-2 des Rekonstruktions-schritts S2 werden die Fourier-Transformierten FBi der Bilder Bi im Fourier-Raum zu einem Gesamtdatensatz IMA k mit großem Fourier-Spektrum des Objekts OBJ zusammengefügt. Hierzu kann bspw. eine PRA-Methode (phase retrieval algorithm) zum Einsatz kommen. Anschließend wird in einem Rücktransformationsschritt S2-3 des Rekonstruktions-schritts S2 durch Fourier-Rücktransformation, bspw. "Fast Fourier Transformation" FFT, des Gesamtdatensatzes IMA_k in den Ortsraum das gesuchte hochaufgelöste Bild IMA des Objekts OBJ erzeugt.

Demnach umfasst die FP-Rekonstruktion im Schritt S2 die Fouriertransformation der Einzelbilder Bi im Schritt S2-1, das Fusionieren der so aus den Einzelbildern Bi erzeugten einzelnen Transformierten FBi zur Erzeugung des Gesamtdatensatzes IMA_k im Fourier-Raum im Schritt S2-2 sowie auch die Fourier-Rücktransformation des Gesamtdatensatzes IMA_k zur Erzeugung des hochaufgelösten Bildes IMA im Ortsraum im Schritt S2-3.

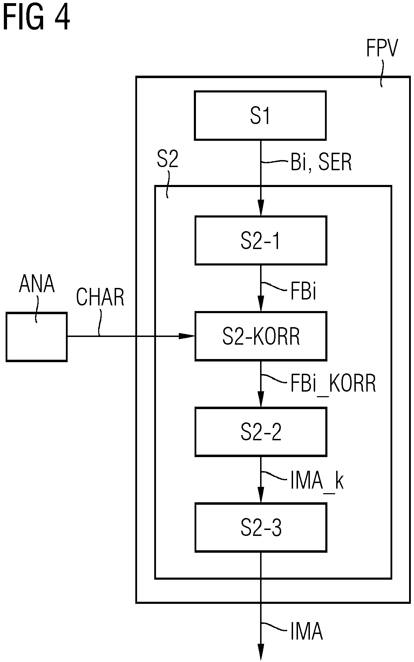

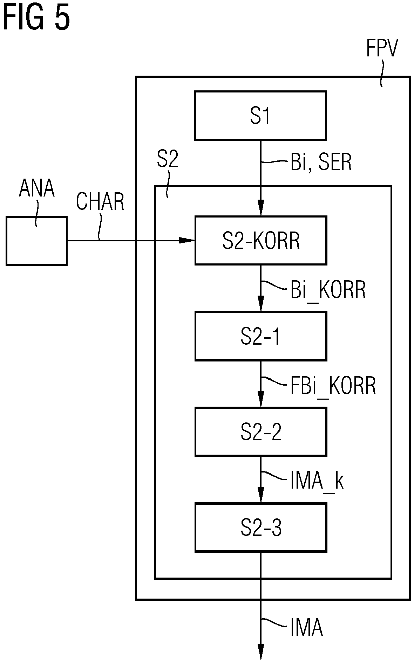

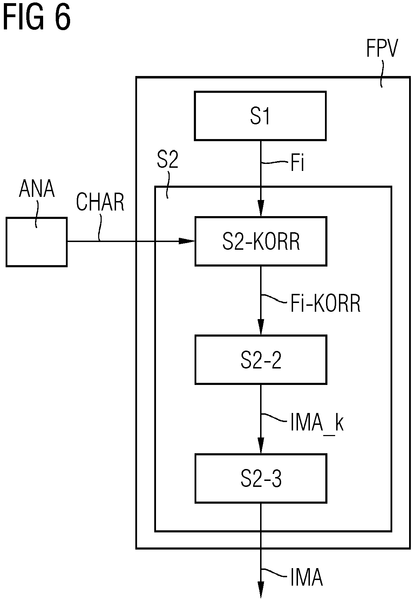

Die FIG 4 und 5 sowie auch die FIG 6 zeigen jeweils eine schematische Darstellung des hier vorgestellten weiter verbesserten Verfahrens FPV zur Erzeugung eines hochaufgelösten Bildes IMA des Objekts OBJ in einer ersten, zweiten und dritten Ausführungsform. Wie oben erwähnt ist dieses Verfahren an das FP-Verfahren FPV angelehnt und umfasst in der ersten und zweiten Ausführungsform gem. FIG 4 und 5 die oben bereits eingeführten Schritte S1, S2. Während der Akquiseschritt S1 jeweils so ausgeführt werden kann wie oben beschrieben, resultierend in der Bildserie SER mit Einzelaufnahmen Ei, die als Bilder Bi im Ortsraum realisiert sein können, wird im Rekonstruktionsschritt S2 jeweils ein Korrekturschritt S2-KORR eingeführt, wenn auch in den beiden Ausführungsformen an unterschiedlichen Stellen im Prozessablauf des jeweiligen Rekonstruktionsschritts S2. Die dritte Ausführungsform gemäß FIG 6 umfasst ebenfalls eine Akquiseschritt und einen Rekonstruktionsschritt und folgt dementsprechend ebenfalls dem Grundansatz des FP-verfahrens. Jedoch sind die im Akquiseschritt aufgrund einer entsprechenden Ausbildung der Bilderzeugungs-einrichtung 120 bspw. mit weniger oder anderen Linsensystemen gelieferten Einzelaufnahmen Ei in diesem Fall keine Bilder im Ortsraum, sondern unmittelbar Datensätze Fi im Fourierraum. Demnach kann im Rekonstruktionsschritt auf eine Transformation verzichtet werden.

Der im jeweiligen Korrekturschritt S2-KORR angewendete, im Folgenden erläuterte Korrekturansatz geht davon aus, dass bei einer Bildaufnahme zur Erzeugung einer Einzelaufnahme Ei mit der Aufnahmeeinrichtung 100 technisch gesehen eine Faltung f(OBJ) * MTF einer vom jeweiligen Objekt OBJ abhängigen Objektfunktion f(OBJ) mit einer Übertragungsfunktion MTF der Aufnahmeeinrichtung 100 stattfindet, so dass eine jeweilige Einzelaufnahme Ei vom Objekt abhängige Bildinhalte Ei(OBJ) sowie von der Aufnahmeeinrichtung 100 und damit von der Übertragungsfunktion MTF beeinflusste Bildinhalte Ei(MTF) umfasst. Die Übertragungsfunktion oder auch "Modulationsübertragungsfunktion" bzw. "Modulation-Transfer-Function" MTF wird insbesondere durch die Optik, Geometrie und Dimensionierung der Aufnahmeeinrichtung 100 dominiert, dabei insbesondere von Abständen zwischen den Komponenten Beleuchtungseinrichtung 110, Objektebene EOBJ und Bilderzeugungseinrichtung 120 sowie deren Objektiv 121 und Detektionsfläche 122 und deren sonstiger Geometrien und weiterer Eigenschaften. Die MTF sowie die MTF beeinflussende Merkmale einer solchen Aufnahmeeinrichtung 100 sind an sich bekannt.

Der Korrekturansatz in S2-KORR nutzt nun aus, dass die genannte Faltung f(OBJ) * MTF mathematisch umgekehrt werden kann, so dass eventuelle aufgrund der in der Praxis typischerweise nicht idealen Übertragungsfunktion MTF im jeweiligen Bild Bi bewirkte Veränderungen im Vergleich zu einer Abbildung mit idealer Optik etc. weitestgehend bzw. idealerweise vollständig herausgerechnet werden können. Ist eine Einzelaufnahme Ei aufgenommen, können die vom Objekt OBJ stammenden Bildinhalte Ei(OBJ) von von den Einflüssen der Aufnahmeeinrichtung 100 stammenden intrinsischen Veränderungen der Bildinhalten Ei(MTF) rechnerisch getrennt werden. D.h. eine für die Aufnahmeeinrichtung 100 typische und nach einer Charakterisierung der Aufnahmeeinrichtung 100 bekannten Charakteristik CHAR einerseits und die vom typischerweise unbekannten Objekt OBJ stammenden Eigenschaften andererseits können voneinander unterschieden werden, so dass die eigentlichen zur Erzeugung des hochaufgelösten Bildes IMA relevanten Bildinhalte Ei(OBJ) isolierbar sind. Bspw. kann die Charakteristik CHAR die Übertragungsfunktion MTF der Aufnahmeeinrichtung 100 repräsentieren. Eine derartige Charakteristik CHAR für Optiken wie in der Bilderzeugungseinrichtung 120 realisiert kann über Kennzahlen in relativen Einheiten angegeben werden. Dafür gibt es unterschiedliche Herangehensweisen wie bspw. die Seidel 'sche Beschreibung oder die allgemeinere nach Zernike. Bei Zernike werden die Parameter der Entwicklung der Bildfehler nach Besselfunktionen in der jeweiligen Ordnung angegeben. Aus dem entsprechenden Beschreibungssystem und den entsprechenden Koeffizienten kann dann eine 3D Verzeichnung als typischerweise komplexwertige Matrix MAT für die Abbildung der idealen Einzelaufnahme in die reale Einzelaufnahme bestimmt werden. Die Inverse MAT⁻¹ dieser Matrix dient schließlich zur Korrektur der aufgenommenen Einzelaufnahme Ei zur Bestimmung der korrigierten Einzelaufnahme Ei_KORR, d.h. in diesem Beispiel CHAR=MAT⁻¹. Geht man noch einen Schritt weiter, können auch für verschiedene diskrete Punkte im Objekt- oder Bildfeld die Bildgüteparameter bestimmt werden, um so lokale Effekte besser zu erfassen. Aufgrund der Stetigkeit der Abbildungseigenschaften normaler und guter Optik kann dann auch aus den lokalen Beschreibungen wieder eine Gesamtmatrix MAT für das gemessene Bild bestimmt werden.

Die Trennung der Inhalte Ei(OBJ), Ei(MTF) voneinander kann je nachdem, ob die Operation im Ortsraum oder im Fourierraum stattfindet, entweder über eine Entfaltungsoperation im Ortsraum oder aber durch eine Division im Fourierraum erfolgen. Die Operation im Fourierraum wird in der ersten sowie in der dritten Ausführungsform und im Zusammenhang mit den FIG 4, 6 adressiert, während die Operation im Ortsraum Gegenstand der zweiten Ausführungsform ist und im Zusammenhang mit FIG 5 erläutert wird. In beiden Fällen entspricht das Endresultat IMA des weiteren Prozessablaufs einem Bild des Objekts OBJ im Ortsraum, welches mit einer idealen und somit fehlerfreien Aufnahmeeinrichtung 100 aufgenommen worden wäre. Es sei erwähnt, dass die von allen Ausführungsformen umfassten Verfahrensschritte S2-1, S2-2, S2-3 grundsätzlich gleich ablaufen. Sie unterscheiden sich lediglich durch die jeweiligen Eingangsdaten.

In der in der FIG 4 dargestellten ersten Ausführungsform sind die Einzelaufnahmen Ei Bilder im Bi im Ortsraum, d.h. Ei=Bi. Der Korrekturschritt S2-KORR im Rekonstruktionsschritt S2 wird zwischen dem Transformationsschritt S2-1 und dem Fusionsschritt S2-2 eingeführt. Im Korrekturschritt S2-KORR werden in dieser ersten Ausführungsform die bereits eingeführten Transformierten FBi der Einzelbilder Bi jeweils anhand der vorab ermittelten Charakteristik CHAR der Aufnahmeeinrichtung 100 korrigiert, indem eine jeweilige Transformierte FBi durch die Charakteristik CHAR dividiert wird, resultierend in einer korrigierten Bildserie SER_KORR bzw. resultierend in NB korrigierten Transformierten FBi_KORR.

Die korrigierten Transformierten FBi_KORR werden anschließend im bereits eingeführten Fusionsschritt S2-2 im Fourierraum zum Gesamtdatensatz IMA_k des Objekts OBJ zusammengefügt, bspw. unter Zuhilfenahme der PRA-Methode. Daraufhin wird im Rücktransformationsschritt S2-3 des Rekonstruktionsschritts S2 durch Fourier-Rücktransformation, bspw. FFT, des Gesamtdatensatzes IMA_k in den Ortsraum das gesuchte hochaufgelöste Bild IMA des Objekts OBJ erzeugt, welches nun aufgrund der Korrektur im Korrekturschritt S2-KORR von eventuellen Einflüssen der verwendeten Optik auf die Bildgüte befreit ist. Die Schritte S2-1, S2-2 und S2-3 der FIG 4 entsprechen also den Schritten S2-1, S2-2, S2-3 der FIG 3. Lediglich die Eingangsdaten selbst, die im Fusionsschritt S2-2 verarbeitet werden, unterscheiden sich von den im Verfahren der FIG 3 verwendeten Eingangsdaten des dortigen, an sich gleichen Fusionsschritts S2-2.

Auch in der in der FIG 5 dargestellten zweiten Ausführungsform sind die Einzelaufnahmen Ei Bilder im Bi im Ortsraum, d.h. Ei=Bi. Der Korrekturschritt S2-KORR im Rekonstruktionsschritt S2 wird vor dem Transformationsschritt S2-1 eingeführt. Im Korrekturschritt S2-KORR werden in dieser zweiten Ausführungsform die Einzelbilder Bi aus dem Akquiseschritt S1 jeweils anhand der vorab ermittelten Charakteristik CHAR der Aufnahmeeinrichtung 100 korrigiert, indem ein jeweiliges Bild Bi unter Verwendung der Charakteristik CHAR mathematisch entfaltet wird, resultierend in einer korrigierten Bildserie SER_KORR bzw. resultierend in NB korrigierten Einzelbildern Bi_KORR. Aus diesen korrigierten Einzelbildern Bi_KORR werden anschließend im Transformationsschritt S2-1 korrigierte Fourier-Transformierte FBi_KORR der korrigierten Bilder Bi_KORR berechnet. Die korrigierten Transformierten FBi_KORR werden anschließend im Fusionsschritt S2-2 im Fourierraum zum Gesamtdatensatz IMA_k des Objekts OBJ zusammengefügt, bspw. unter Zuhilfenahme der PRA-Methode. Daraufhin wird im Rücktransformationsschritt S2-3 des Rekonstruktionsschritts S2 durch Fourier-Rücktransformation, bspw. FFT, des Gesamtdatensatzes IMA_k in den Ortsraum das gesuchte hochaufgelöste Bild IMA des Objekts OBJ erzeugt, welches nun aufgrund der Korrektur im Korrekturschritt S2-KORR von eventuellen Einflüssen der verwendeten Optik auf die Bildgüte befreit ist. Die Schritte S2-1, S2-2 und S2-3 der FIG 5 entsprechen also den Schritten S2-1, S2-2, S2-3 der FIG 3 und FIG 4. Lediglich die Eingangsdaten selbst, die im Fusionsschritt S2-2 verarbeitet werden, unterscheiden sich von den in den Verfahren der FIG 3 und 4 verwendeten Eingangsdaten des dortigen, an sich gleichen Fusionsschritts S2-2.

Je nach Konfiguration der Bilderzeugungseinrichtung 120 können die von dieser gelieferten Daten bzw. Einzelaufnahmen Ei entweder wie oben angenommen als Bilder Bi im Ortsraum, d.h. Ei=Bi, oder aber als Datensätze Fi im Fourierraum, d.h. Ei=Fi, ausgebildet sein. Bspw. für den Fall, dass ein Mikroskop mit einer sog. Bertrand-Linse ausgestattet ist, sind Konfigurationen möglich, bei denen die gelieferten Einzelaufnahmen Ei bereits Fouriertransformierte sind, d.h. Ei=Fi.

Derartige Datensätze Fi im Fourierraum entsprechen dann im Prinzip den oben mit "FBi" bezeichneten Transformierten der Bilddaten Bi. Konsequenterweise entfällt in dieser Konfiguration der Transformationsschritt S2-1 und die Eingangsdaten für den Korrekturschritt S2-KORR in dieser dritten Ausführungsform Ausführungsform wären eben diese Datensätze Fi. Die FIG 6 zeigt diese Variante des FP-Verfahrens FPV, in der die Bilderzeugungseinrichtung 120 so konfiguriert ist, dass die im Akquiseschritt S1 von der Detektionsfläche 122 detektierten und gelieferten Einzelaufnahmen Ei=Fi, wie oben bereits beschrieben wiederum entsprechend verschiedenen optischen Konfigurationen Ci, Datensätze im Fourierraum sind. Diese Einzelaufnahmen Fi bzw. eine Serie SER von derartigen Einzelaufnahmen Fi wird dem Rekonstruktionsschritt S2 zur Verfügung gestellt. Dort werden die Einzelaufnahmen Fi wie im Zusammenhang mit der ersten Ausführungsform beschrieben im Korrekturschritt S2-KORR mit Hilfe der bekannten Charakteristik CHAR korrigiert, resultierend in korrigierten Einzelaufnahmen Fi_KORR. Diese werden wie ebenfalls oben beschrieben im Fusionsschritt S2-2 zum Gesamtdatensatz IMA k im Fourierraum fusioniert, aus dem dann im Rücktransformationsschritt S2-3 das gesuchte räumlich hochaufgelöste Bild IMA erzeugt wird.

In allen Ausführungsformen werden also in den nach dem jeweiligen Korrekturschritt S2-KORR ausgeführten Schritten des jeweiligen FP-Verfahrens die von den Eigenschaften CHAR der Aufnahmeeinrichtung 100 bereinigten Inhalte verwendet, d.h. Ei(OBJ). Das hat den Vorteil, dass die Erzeugung des hochaufgelösten Bildes IMA mit Daten erfolgt, die einer Aufnahme mit idealer Übertragungsfunktion MTF entsprechen, was im idealen Fall, bspw. nach Bereinigung von Apertureffekten, eine rechteckige Aperturfunktion bedeutet, die den Wert = 1 für NA < NAObj und 0 sonst hat. So schließen dann die Aperturfunktionen quasi stetig aneinander an, was den Aufwand für die Rekonstruktion der Bilder aus den Einzelaufnahmen Ei rechentechnisch vereinfacht. Dadurch kann der Rechenaufwand der Auswerteeinrichtung bis zum Erreichen eines hochwertigen synthetisierten Auswertebildes deutlich reduziert werden. Zudem können die Aufnahmeeinstellungen für die Einzelaufnahmen in größeren Incrementen gewählt werden, was die effektive Zahl der aufzunehmenden Einzelaufnahmen Ei für eine Serie SER reduziert.

Die hier vorgestellte Lösung sieht insbesondere vor, dass als Charakteristik CHAR die Abbildungsgüte der Aufnahmeeinrichtung 100 als Korrekturgröße im jeweiligen Schritt S2-KORR verwendet wird. Die Abbildungsgüte CHAR kann über ein gängiges Kennzahlensystem beschrieben werden, bspw. unter Verwendung von Zernike-Koeffizienten oder Seidel'sehen Bildgüteparametern. Mit derartigen Kennzahlen ist dann auch die Übertragungsfunktion MTF der Aufnahmeeinrichtung 100 bestimmt.

Die Bestimmung der Abbildungsgüte CHAR erfolgt in allen Ausführungsformen in einem Analyseschritt ANA, typischerweise vor der Ausführung des FP-Verfahrens FPV. Der Analyseschritt ANA kann zur Bestimmung der Abbildungsgüte CHAR bspw. wie in EP1631809B1 beschrieben vorgehen bzw. bspw. Anordnungen von einem oder mehreren Testmustern in der Objektebene EOBJ verwenden, bspw. sog. "Sterntests". Dabei werden punktförmige Objekte eingesetzt, die kleiner sind als das Auflösungsvermögen der Bilderzeugungseinrichtung 120 der Aufnahmeeinrichtung 100 und somit als ideale, Kugelwellen emittierende Objektpunkte angesehen werden können. Von einem derartigen Testmuster wird eine Fokusmessserie mit einer Vielzahl von Einzelmessungen aufgenommen, bei der zwischen verschiedenen Einzelmessungen der relative Abstand zwischen dem Testmuster und dem Objektiv 121 und damit die Fokusebene einer jeweiligen Einzelmessung in vorgegebener Weise variiert wird. Idealerweise wird dabei eine ungerade Zahl von Fokusebenen vorgesehen, bspw. fünf, sieben oder neun Fokusebenen, wobei die mittlere Fokusebene dann bestmöglich im Fokus des Objektivs 121 bzw. der Bilderzeugungseinrichtung 120 liegen sollte, also bspw. in der Objektebene EOBJ. Die Fokusebenen werden äquidistant über einen Bereich von bspw. ±0,8 ... 1 des Tiefenschärfebereiches der Bilderzeugungseinrichtung 120 verteilt. Aus der so erzeugten Fokusmessserie kann dann mit an sich bekannten Auswerteverfahren wie bspw. Gerchberg-Saxton, Levenberg-Marquardt oder wiederum wie in EP1631809B1 beschrieben die Abbildungsgüte CHAR bestimmt werden. Diese wird wie im Zusammenhang mit FIG 4 bzw. FIG 5 beschrieben im jeweiligen Korrekturschritt S2-KORR verwendet, um in der ersten Ausführungsform aus den Transformierten FBi im Fourierraum korrigierte Transformierte FBi_KORR bzw. in der zweiten Ausführungsform aus den Bildern Bi im Ortsraum korrigierte Bilder Bi_KORR zu berechnen.

Bspw. kann eine im Schritt ANA bestimmte Abbildungsgüte CHAR zwischengespeichert und im Bedarfsfall dem Korrekturschritt S2-KORR zur Verfügung gestellt werden. Für den Fall, dass der Aufbau der Aufnahmeeinrichtung 100 nicht verändert wird, ist es nicht notwendig, für jede einzelne Ausführung des FP-Verfahrens FPV die Abbildungsgüte CHAR zu bestimmen, da davon auszugehen ist, dass sie unverändert bleibt. Wird jedoch die Aufnahmeeinrichtung 100 und insbesondere deren optisches Abbildungssystem 120 in seinen Eigenschaften verändert, sollte die Abbildungsgüte CHAR neu bestimmt werden. Demnach ist es vorteilhaft, wenn die Aufnahmeeinrichtung 100 und insbesondere deren optisches System 120 eine hohe zeitliche Stabilität aufweist, was eine hohe Reproduzierbarkeit über längere Zeiträume bedingt bzw. ermöglicht. Das kann bspw. über mechanisch und thermisch stabile Ausführungen einerseits ermöglicht werden, andererseits aber auch über geeignet angeordnete Korrektur- und Kompensationselemente, die über regelungstechnische opto-mechatronische Elemente effektiv eine hohe Langzeitstabilität erreichen.

## Patentansprüche

1. Verfahren zum Erzeugen eines hochaufgelösten Bildes IMA eines Objekts OBJ mit einer Aufnahmeeinrichtung umfassend einen ein Syntheseverfahren verwendenden Rekonstruktionsschritt S2, wobei
- eine Vielzahl NB von Einzelaufnahmen Ei mit i=1,...,NB des Objekts OBJ umfassende Serie SER bereitgestellt wird, wobei verschiedene Einzelaufnahmen Ei der Serie SER in einem vorgelagerten Akquiseschritt S1 mit unterschiedlichen optischen Konfigurationen Ci der Aufnahmeeinrichtung aufgenommen sind,
- im Rekonstruktionsschritt S2 aus der Serie SER hervorgehende Datensätze in einem Korrekturschritt S2-KORR anhand einer Charakteristik CHAR der Aufnahmeeinrichtung korrigiert werden, resultierend in einer korrigierten Serie SER_KORR, umfassend NB korrigierte Einzelaufnahmen Ei_KORR im Fourierraum, und das hochaufgelöste Bild IMA basierend auf der so korrigierten Serie SER KORR mittels einer synthetisierenden Rekonstruktion erzeugt wird.

2. Verfahren nach Anspruch 1, **dadurch gekennzeichnet, dass** das Syntheseverfahren ein Ptychographieverfahren, insbesondere ein Fourier-Ptychographieverfahren, und die synthetisierende Rekonstruktion eine Ptychographie-Rekonstruktion, insbesondere eine Fourier-Ptychographie-Rekonstruktion, ist.

3. Verfahren nach einem der Ansprüche 1 bis 2, **dadurch gekennzeichnet, dass** im Korrekturschritt S2-KORR vom Abbildungssystem in den Einzelaufnahmen Ei verursachte Einflüsse Ei (MTF) entfernt werden.

4. Verfahren nach einem der Ansprüche 1 bis 3, **dadurch gekennzeichnet, dass** die Charakteristik CHAR der Aufnahmeeinrichtung eine Abbildungsgüte der Aufnahmeeinrichtung repräsentiert und durch eine Übertragungsfunktion MTF der Aufnahmeeinrichtung beschrieben ist.

5. Verfahren nach einem der Ansprüche 1 bis 4, **dadurch gekennzeichnet, dass** in der synthetisierenden Rekonstruktion des Rekonstruktionsschritts S2
- in einem Fusionsschritt S2-2 die korrigierten Einzelaufnahmen Ei_KORR im Fourierraum zu einem Gesamtdatensatz IMA_k zusammengefügt werden,
- in einem Rücktransformationsschritt S2-3 durch Fourier-Rücktransformation des Gesamtdatensatzes IMA_k in den Ortsraum das hochaufgelöste Bild IMA des Objekts OBJ erzeugt wird.

6. Verfahren nach einem der Ansprüche 1 bis 5, **dadurch gekennzeichnet, dass** die dem Rekonstruktionsschritt S2 bereitgestellten Einzelaufnahmen Ei des Objekts OBJ Bilder Bi im Ortsraum sind, wobei im Rekonstruktionsschritt S2
- im Korrekturschritt S2-KORR die bereitgestellten Bilder Bi jeweils anhand der Charakteristik CHAR korrigiert werden, resultierend in korrigierten Bildern Bi_KORR, und
- die so erzeugten korrigierten Bilder Bi KORR in einem Transformationsschritt S2-1 jeweils fouriertransformiert werden, resultierend in den jeweiligen korrigierten Einzelaufnahmen Ei_KORR.

7. Verfahren nach Anspruch 6, **dadurch gekennzeichnet, dass** im Korrekturschritt S2-KORR ein jeweiliges Bild Bi im Ortsraum mittels der Charakteristik CHAR entfaltet wird, resultierend in einem jeweiligen korrigierten Bild Bi_KORR.

8. Verfahren nach einem der Ansprüche 1 bis 5, **dadurch gekennzeichnet, dass** die dem Rekonstruktionsschritt S2 bereitgestellten Einzelaufnahmen Ei des Objekts OBJ Bilder Bi im Ortsraum sind, wobei im Rekonstruktionsschritt S2
- in einem Transformationsschritt S2-1 die bereitgestellten Bilder Bi jeweils fouriertransformiert werden, resultierend in jeweiligen Transformierten FBi, und
- die so erzeugten Transformierten FBi als Eingangsdatensätze INi dem Korrekturschritt S2-KORR bereitgestellt werden, wobei im Korrekturschritt S2-KORR jeder der Eingangsdatensätze INi anhand der Charakteristik CHAR korrigiert wird, resultierend in den korrigierten Einzelaufnahmen Ei_KORR.

9. Verfahren nach einem der Ansprüche 1 bis 5, **dadurch gekennzeichnet, dass** die dem Rekonstruktionsschritt S2 bereitgestellten Einzelaufnahmen Ei des Objekts OBJ Datensätze Fi im Fourierraum sind, wobei die Datensätze Fi als Eingangsdatensätze INi dem Korrekturschritt S2-KORR bereitgestellt werden, wobei im Korrekturschritt S2-KORR jeder der Eingangsdatensätze INi anhand der Charakteristik CHAR korrigiert wird, resultierend in den korrigierten Einzelaufnahmen Ei_KORR.

10. Verfahren nach einem der Ansprüche 8 bis 9, **dadurch gekennzeichnet, dass** im Korrekturschritt S2-KORR ein jeweiliger Eingangsdatensatz INi im Fourierraum durch die Charakteristik CHAR dividiert wird.

11. Verfahren nach einem der Ansprüche 1 bis 10, **dadurch gekennzeichnet, dass** das Verfahren den Akquiseschritt S1 umfasst, wobei
- der Akquiseschritt S1 dem Rekonstruktionsschritt S2 vorgeschaltet ist und
- im Akquiseschritt S1 die die Vielzahl NB von Einzelaufnahmen Ei des Objekts OBJ umfassende Serie SER aufgenommen wird, wobei verschiedene Einzelaufnahmen Ei der Serie SER mit unterschiedlichen optischen Konfigurationen Ci der Aufnahmeeinrichtung aufgenommen werden.

12. Verfahren nach Anspruch 11, **dadurch gekennzeichnet, dass** die Charakteristik CHAR im Akquiseschritt S1 ermittelt wird.

13. Anordnung zum Erzeugen eines hochaufgelösten Bildes IMA eines Objekts OBJ, umfassend eine Aufnahmeeinrichtung (100) mit
- einem Controller (130), wobei der Controller (130) eingerichtet ist, um das Verfahren nach einem der Ansprüche 1 bis 12 auszuführen,
- einer Beleuchtungseinrichtung (110) mit einer Vielzahl von Lichtquellen (111-q), die derart ausgebildet und angeordnet sind, dass sie verschiedene Beleuchtungen des Objekts OBJ aus verschiedenen Richtungen erzeugen können,
- einer Bildgebungseinrichtung (120), die derart angeordnet und ausgebildet ist, dass sie Einzelaufnahmen Ei des Objekts OBJ bei den verschiedenen Beleuchtungen aufnehmen kann.

14. Anordnung nach Anspruch 13, **dadurch gekennzeichnet, dass** die Bildgebungseinrichtung (120) derart eingerichtet ist, dass die Einzelaufnahmen Ei des Objekts OBJ Bilder im Ortsraum sind.

15. Anordnung nach Anspruch 13, **dadurch gekennzeichnet, dass** die Bildgebungseinrichtung (120) derart eingerichtet ist, dass die Einzelaufnahmen Ei des Objekts OBJ Datensätze im Fourierraum sind.
